# EUROPÄISCHE PATENTSCHRIFT

(11) **EP 2 427 713 B1**
(45) Veröffentlichungstag und Bekanntmachung des Hinweises auf die Patenterteilung: **05.06.2013**
(21) Anmeldenummer: 10717059.9
(22) Anmeldetag: 27.04.2010
(51) Int. Cl.: F28D 20/00, F28D 17/02, F27D 1/04

(54) **WÄRMESPEICHER MIT MINDESTENS EINEM SPEICHERELEMENT**
HEAT STORAGE COMPRISING AT LEAST ONE STORAGE ELEMENT
ACCUMULATEUR THERMIQUE COMPRENANT AU MOINS UN ELEMENT DE STOCKAGE

(30) Priorität: 08.05.2009 DE 102009020531
(43) Veröffentlichungstag der Anmeldung: 14.03.2012
(73) Patentinhaber: KBA-MetalPrint GmbH, 70435 Stuttgart (DE); Kraftanlagen München GmbH, 80339 München (DE)
(72) Erfinder: HÄNEL, Matthias, 74394 Hessigheim (DE); DOERBECK, Till, 83026 Rosenheim (DE)
(74) Vertreter: Stiel, Jürgen
(86) Internationale Anmeldenummer: PCT/EP2010/002564
(87) Internationale Veröffentlichungsnummer: WO 2010/127785

(56) Entgegenhaltungen:
- AT-B- 372 364
- DE-A1- 2 529 372
- DE-A1- 4 038 844
- DE-A1- 10 158 193
- DE-A1- 10 229 405
- DE-C1- 19 808 810
- DE-T2- 69 612 743
- DE-U1- 8 705 996
- GB-A- 267 877

## Beschreibung

Die Erfindung betrifft einen Wärmespeicher mit mindestens einem Speicherelement, das übereinandergeschichtete Formsteine aufweist, wie er beispielweise in AT 372 364 gezeigt wird.

Wärmespeicher der eingangs genannten Art sind bekannt. Sie werden beispielsweise zur Zwischenspeicherung überschüssiger Prozesswärme verwendet, um die Wärme zu einem späteren Zeitpunkt auf geeignete Weise verwenden zu können. Wärmespeicher dieser Art werden beispielsweise in Verbindung mit Abgasreinigungsanlagen zur thermischen Abgasreinigung eingesetzt. Der Wärmespeicher weist ein Gehäuse auf, in dem mindestens ein Speicherelement angeordnet ist. Das Speicherelement besteht aus einem wärmespeichernden Material, wobei insbesondere keramisches Material zum Einsatz kommt. Das wärmespeichernde Material liegt in Form von Formsteinen vor, die übereinandergeschichtet sind. Zum Aufladen des Wärmespeichers wird ein heißer Mediumstrom durch das mindestens eine Speicherelement geleitet, sodass sich dieses aufheizt. Zum Entladen des Wärmespeichers beziehungsweise zum Entnehmen der gespeicherten Wärme wird ein kalter Mediumstrom durch das aufgeheizte Speicherelement geleitet, wodurch der Mediumstrom aufgeheizt und nach dem Durchströmen des Speicherelements als heißer Mediumstrom zur Verfügung steht.

Die Formsteine weisen eine Vielzahl von Durchströmungskanälen für das Medium auf. Bei übereinandergeschichteten Formsteinen sind diese üblicherweise so angeordnet, dass die Durchströmungskanäle der unten angeordneten Formsteine mit den Strömungskanälen der oben angeordneten Formsteine fluchten, das heißt, mit diesen in Strömungsverbindung stehen. Auf diese Weise kann das Medium die Formsteine des Speicherelements von unten nach oben durchgängig durchströmen. Das Einbringen von Wärme und die Entnahme von Wärme erfolgen in Abhängigkeit der Energieströme bei der Be- und Entladung, wobei diese Energieströme unterschiedlich groß sein können. Hierdurch kann es lokal zu Temperaturerhöhungen in dem Wärmespeicher beziehungsweise dessen Speicherelement kommen. Bei der Einbringung von Wärme in den Wärmespeicher stellt sich ein Wärmeprofil ein. Dabei weist der Wärmespeicher eingangsseitig die höchste Temperatur auf. Die Temperatur des Wärmespeichers nimmt ausgehend von einem Mediumeinlass in Richtung eines Mediumauslasses des Wärmespeichers ab, sodass dort die niedrigste Temperatur vorliegt. Entsprechendes gilt für die Temperaturverteilung beim Entnehmen von Wärme.

Wird dem Wärmespeicher keine Wärme zugeführt oder entnommen, ruht also der Wärmespeicher, findet eine Vergleichmäßigung des Temperaturprofils über das Volumen des Wärmespeichers hinweg statt. Dabei nähern sich die höchste in dem Wärmespeicher vorliegende Temperatur und die niedrigste vorliegende Temperatur einer mittleren Temperatur an. Diese Vergleichmäßigung findet hauptsächlich aufgrund von Wärmeleitung innerhalb des Wärmespeichers statt. Da die Formsteine des Speicherelements übereinandergeschichtet sind, weisen sie Berührpunkte auf und stehen dabei im Wesentlichen in flächigem Kontakt. Dies führt dazu, dass ein wärmerer der Formsteine Wärme an einen kälteren der Formsteine abgibt, womit sich mit der Zeit aufgrund des Temperaturausgleichs der Formsteine die mittlere Temperatur einstellt. Dieser Temperaturausgleich, das heißt die Vergleichmäßigung der Temperatur innerhalb des Wärmespeichers, ist häufig unerwünscht, weil damit die beim Entnehmen von Wärme erzielbare Temperatur nur noch gleich oder kleiner der mittleren Temperatur ist, nicht jedoch nahezu der beim Beladen vorliegenden hohen Temperatur entspricht.

Der Erfindung liegt daher die Aufgabe zugrunde, einen Wärmespeicher mit mindestens einem Speicherelement zu schaffen, bei dem ein gewünschter Temperaturverteilungszustand auch bei längeren Ruhepausen beibehalten wird. Insbesondere soll die Temperaturvergleichmäßigung in vertikaler Richtung zumindest vermindert beziehungsweise verzögert werden. Dabei soll vorzugsweise ein reproduzierbarer Zustand in dem Wärmespeicher beibehalten werden, sodass eine optimale Prozessführung mit hohem Wirkungsgrad möglich ist. Das bedeutet, dass bei einem Entladen des Wärmespeichers das zum Entladen verwendete Medium nahezu auf die bei dem Beladen des Wärmespeichers vorliegende hohe Temperatur gebracht werden kann.

Diese Aufgabe wird erfindungsgemäß mit einem Wärmespeicher mit den Merkmalen des Anspruchs 1 erreicht. Dabei ist vorgesehen, dass die Formsteine im Wesentlichen in einem Mauerverbund angeordnet sind. Die übereinandergeschichteten Formsteine liegen beispielsweise in einer unteren und einer oberen Lage vor. Die Formsteine der unteren Schicht sind dabei nebeneinander angeordnet, sodass zwischen den Formsteinen jeweils eine Stoßfuge vorliegt. Diese Stoßfuge soll von Formsteinen der oberen Lage im Wesentlichen überdeckt sein. Die übereinandergeschichteten Formsteine liegen folglich in einem gegeneinander lateral versetzten Verbund vor, womit der Mauerverbund gebildet ist. Jeweils eine der Stoßfugen kann vollständig von einem Formstein, jedoch auch von einem Verbund aus mehreren Formsteinen überdeckt sein. Die versetzte Anordnung der Formsteine kann lediglich in einer Richtung vorgesehen sein, es ist jedoch auch möglich, dass die Formsteine in zwei, insbesondere senkrecht aufeinanderstehenden Richtungen, gegeneinander versetzt angeordnet sind. Auf diese Weise wird die Wärmeleitung zwischen den Formsteinen, insbesondere zwischen den übereinander angeordneten Formsteinschichten, verringert, sodass die Temperaturvergleichmäßigung innerhalb des Wärmespeichers verhindert oder zumindest verzögert ist.

Der Formstein kann eine beliebige Form aufweisen, vorzugsweise ist er jedoch quaderförmig, hat also einen rechteckigen Querschnitt. Alternativ kann auch ein dreieckiger Querschnitt vorgesehen oder der Formstein pyramidenförmig sein. Der Formstein besteht erfindungsgemäß aus Keramik, ist ein Formkeramikstein. Dieses Material zeichnet sich vor allem durch seine hohe Wärmebeständigkeit aus. Dies ist aufgrund der periodischen Aufheiz- und Abkühlzyklen des Wärmespeichers von Bedeutung. Die Durchströmungskanäle können ebenfalls eine beliebige Querschnittsform aufweisen. Vorzugsweise sind sie rund oder rechteckig, insbesondere quadratisch.

Eine Weiterbildung der Erfindung sieht vor, dass die Formsteine mehrere Formsteinlagen bilden, wobei zwischen mindestens zwei Formsteinlagen mindestens ein Querstromraum ausgebildet ist. Üblicherweise stehen bei übereinandergeschichteten Formsteinen, auch bei Formsteinen, die im Mauerverbund angeordnet sind, die Durchströmungskanäle der Formsteine miteinander in unmittelbarerer Fluidverbindung. Das bedeutet, dass das Medium aus einem Durchströmungskanal eines Formsteins unmittelbar in einem weiteren Durchströmungskanal eines weiteren Formsteins einströmt. Das Medium durchläuft also den Wärmespeicher im Wesentlichen lediglich in Hauptströmungsrichtung des Mediums. Um einen Austausch des Mediums auch in andere Richtungen zu ermöglichen, insbesondere innerhalb einer senkrecht zu der Hauptströmungsrichtung des Mediums stehenden Ebene, ist der Querstromraum vorgesehen. Dieser ist zwischen mindestens zwei Formsteinlagen ausgebildet. Das bedeutet, dass das Medium nach dem Durchströmen eines Formsteins einer Formsteinlage zunächst in den Querstromraum einströmt, um aus diesem anschließend in den Formstein der nächsten Formsteinlage zu gelangen. Die nächste Formsteinlage liegt dabei in Hauptströmungsrichtung des Mediums. Auf diese Weise liegt in dem Querstromraum für jeden Durchströmungskanal des Formsteins im Wesentlichen ein Freistrahl vor, das heißt, es findet eine Diffusion des den Formstein beziehungsweise den Durchströmungskanal des Formsteins durchlaufenden Mediums in dem Querstromraum statt. Dadurch strömt das aus dem Durchströmungskanal des Formsteins ausströmende Medium nicht unmittelbar in den oberhalb des Durchströmungskanals des einen Formkörpers angeordneten Durchströmungskanal des anderen Formkörpers ein, sondern es findet eine Quervermischung des Mediums zwischen Durchströmungskanälen der Formkörper statt. Der Querstromraum zerstört die sich beim Durchströmen der Durchströmungskanäle des Formsteins ausbildenden Turbulenzstrukturen und sorgt so insbesondere für ein Abklingen der Turbulenzintensität. Auf diese Weise wird beim Beladen beziehungsweise Entladen eine höhere Effizienz des Wärmespeichers erzielt.

Die Erfindung sieht vor, dass zumindest einige der Formsteine, insbesondere eine Wärmeleitung von einem Formstein zu einem anderen Formstein vermindernde, Füße aufweisen.

Über die Füße stehen die Formsteine mit, insbesondere unterhalb geschichteten, Formsteinen in Verbindung. Das bedeutet, dass die Formsteine lediglich über eine relativ geringe Fläche, nämlich die Fläche der Füße, miteinander in flächigem Kontakt stehen und nicht etwa vollflächig mit einander zugewandten Seitenflächen der Formsteine. Mittels der Füße der Formsteine kann auch der Querstromraum zwischen zwei Formsteinlagen ausgebildet sein, indem die Formsteine außer in den von den Füßen eingenommenen Bereichen voneinander beabstandet werden. Die Füße sollen insbesondere die Wärmeleitung zwischen den Formsteinen vermindern. Im Vergleich zu den vollflächig miteinander in Berührkontakt stehenden Formsteinen gelingt dies vor allem durch die Verringerung der Kontaktfläche zwischen den Formsteinen.

Die Erfindung sieht vor, dass die Füße einstückig mit dem übrigen Bereich des jeweiligen Formsteins ausgebildet sind. Die Füße bestehen demnach aus demselben Material wie der Formstein selbst. Es kann vorgesehen sein, dass die Füße bereits direkt nach beziehungsweise bei einer Herstellung des Formsteins mit ausgebildet sind. Erfindungsgemäß wird zunächst der Formstein gefertigt und anschließend werden die Füße aus diesem herausgearbeitet, unter Verwendung eines abtragenden Bearbeitungsverfahrens, erfindungsgemäß Fräsen.

Eine Weiterbildung der Erfindung sieht mindestens einen unterhalb und/oder oberhalb des Speicherelements ausgebildeten Sammelraum für ein den Wärmespeicher durchströmendes Medium vor. In dem Wärmespeicher ist also mindestens ein Sammelraum vorgesehen, der in Strömungsrichtung vor und/oder nach dem mindestens einen Speicherelement vorgesehen sein kann. Der Sammelraum kann dabei auch an mehrere Speicherelemente angeschlossen sein, sodass er einer Verteilung des Mediums auf die Speicherelemente beziehungsweise einem Zusammenführen des Mediums nach dessen Durchlaufen der Speicherelemente dient. In den Wärmespeicher gelangendes Medium kann also zunächst in den Sammelraum gelangen und erst anschließend das mindestens eine Speicherelement durchlaufen. Ebenso kann es vorgesehen sein, dass das Medium nach dem Durchlaufen des mindestens einen Speicherelements in einen weiteren Sammelraum gelangt, bevor es aus dem Wärmespeicher herausgeführt wird. Der Sammelraum kann daher einer Vergleichmäßigung der Strömung nach dem Durchlaufen der Speicherelemente dienen.

Eine Weiterbildung der Erfindung sieht mindestens einen Mediumeinlass in dem zugeordneten Sammelraum vor, wobei der Mediumeinlass quer zur Durchströmungsrichtung des Mediums durch die Formsteine vorgesehen ist. Dem jeweiligen Sammelraum ist also mindestens ein Mediumeinlass zugeordnet. Mittels des Mediumeinlasses kann Medium in den Sammelraum des Wärmespeichers gelangen. Dabei ist der Mediumeinlass zur Durchströmungsrichtung des Mediums durch die Formsteine angewinkelt, sodass ein Einströmen des Mediums in den Sammelraum im Wesentlichen quer zu der Durchströmungsrichtung erfolgt. Auf diese Weise erfolgt eine effiziente Durchmischung des Mediums in dem Sammelraum, bevor es in das mindestens eine Speicherelement eintritt.

Eine Weiterbildung der Erfindung sieht mindestens einen Mediumauslass in dem zugeordneten Sammelraum vor, wobei der Mediumauslass quer zu der Durchströmungsrichtung des Mediums durch die Formsteine vorgesehen ist. Hinsichtlich des Mediumauslasses gilt das bereits zu dem Mediumeinlass Gesagte. Der mindestens eine Mediumauslass ist demnach dem Sammelraum zugeordnet und sorgt für ein Ausströmen des Mediums im Wesentlichen quer zu der Durchströmungsrichtung des Mediums durch die Formsteine. Zu diesem Zweck ist der Mediumauslass zu dieser angewinkelt vorgesehen. Dabei kann ein beliebiger Winkel zwischen der Durchströmungsrichtung und der durch den Mediumauslass vorgesehenen Auslassrichtung wählbar sein. Sowohl für den Mediumeinlass als auch für den Mediumauslass kann es vorgesehen sein, dass mehrere Mediumeinlässe beziehungsweise Mediumauslässe jeweils gegenüberliegend angeordnet sind. Auf diese Weise kann ein gleichmäßiges Beladen beziehungsweise Entladen des Wärmespeichers sichergestellt werden.

In einer Weiterbildung der Erfindung weist der Formstein einen im Wesentlichen rechteckigen und/oder dreieckigen Querschnitt auf. Er ist also beispielsweise quaderförmig, insbesondere würfelförmig. Auch eine Pyramidenform des Formsteins mit beliebiger Grundfläche - beispielsweise rechteckig oder dreieckig - ist möglich. Formsteine dieser Art können mit abwechselnder Ausrichtung zueinander angeordnet werden.

Eine Weiterbildung der Erfindung sieht vor, dass der Formstein ein Wabenstein ist. Die Durchströmungskanäle eines solchen Formsteins sind in ihrem Querschnitt im Wesentlichen rechteckig, insbesondere quadratisch.

Eine Weiterbildung der Erfindung sieht vor, dass der Formstein aus Keramik besteht. Alternativ kann er auch lediglich Keramik aufweisen. Dieses Material zeichnet sich durch seine hohe Temperaturwechselbeständigkeit aus. Im Vergleich zu anderen Materialien ist also der Formstein aus Keramik (Formkeramikstein) äußerst langlebig, insbesondere auch bei kurzen Lade- und Entladezyklen des Wärmespeichers.

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: eine seitliche, schematische Schnittdarstellung eines Wärmespeichers mit einem Speicherelement, das übereinandergeschichtete Formsteine aufweist,
- Figur 2: eine Schnittdarstellung eines Formsteins, und
- Figur 3: eine Ansicht des Formsteins von unten.

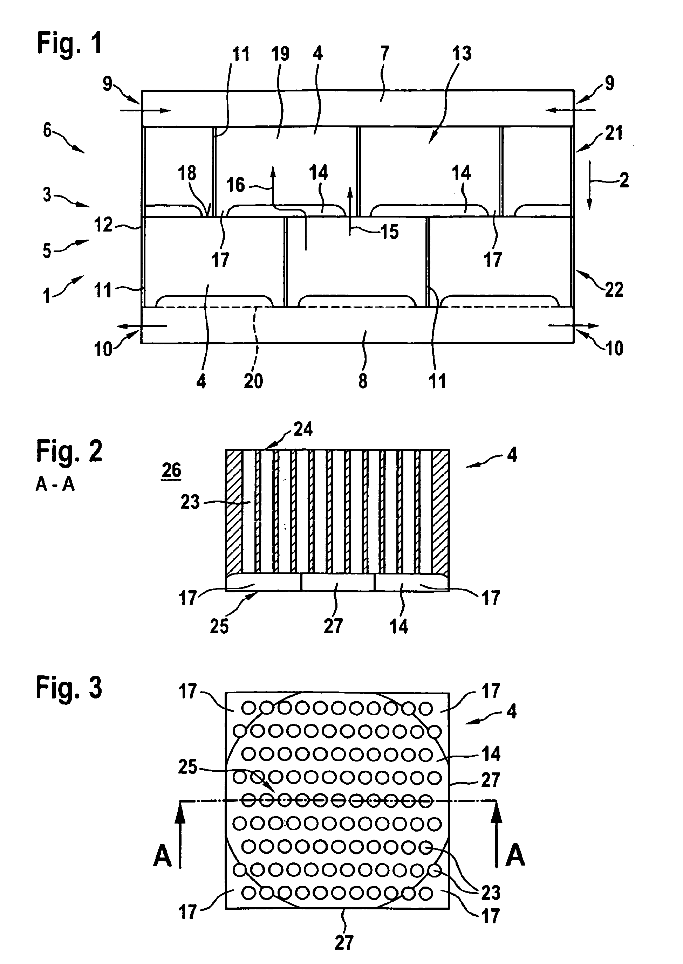

Die Figur 1 zeigt schematisch einen Wärmespeicher 1, der beispielsweise zur Zwischenspeicherung von Prozesswärme verwendet werden kann. Der Wärmespeicher 1 soll derart ausgelegt sein, dass ein in ihm vorhandenes Temperaturprofil möglichst lange erhalten bleibt, also eine möglichst geringe Vergleichmäßigung der Temperatur innerhalb des Wärmespeichers 1 stattfindet. Bei einem Beladen des Wärmespeichers 1 ist ein Medienstrom in Richtung des Pfeils 2 vorgesehen, der Wärmespeicher 1 wird also von oben nach unten mit einem heißen Medium durchströmt. In dem Wärmespeicher 1 ist ein Speicherelement 3 vorgesehen, das übereinandergeschichtete Formsteine 4 aufweist. In dem dargestellten Beispiel sind eine erste Lage 5 und eine zweite Lage 6 vorgesehen. Dies dient jedoch ausschließlich der Illustration, in technischen Anwendungen wird üblicherweise eine Vielzahl von Lagen eingesetzt. Die erste Lage 5 ist dabei die unterste Lage und die zweite Lage 6 ist oberhalb der ersten Lage 5 auf diese geschichtet. Die Formsteine 4 sind beispielsweise Wabensteine, die insbesondere aus Keramik bestehen können. Prinzipiell können die Formsteine 4 eine beliebige Form aufweisen, in dem dargestellten Beispiel sind sie quaderförmig, haben also einen rechteckigen Querschnitt.

Beim Beladen in Strömungsrichtung (Pfeil 2) vor dem Speicherelement 3 ist ein erster Sammelraum 7 und nach dem Speicherelement 3 ein weiterer Sammelraum 8 vorgesehen. Dem ersten Sammelraum 7 sind zwei Mediumeinlässe 9, dem zweiten Sammelraum 8 zwei Mediumauslässe 10 zugeordnet. Es ist beim Beladen des Wärmespeichers 1 vorgesehen, dass das Fluid durch die Mediumeinlässe 9 in den ersten Sammelraum 7 gelangen kann, von dort in das Speicherelement 3 gelangt, dieses in Richtung des Pfeils 2 durchläuft, in dem zweiten Sammelraum 8 gesammelt und schließlich durch die Mediumauslässe 10 aus dem zweiten Sammelraum 8 austreten kann. Die Formsteine 4 der beiden Lagen 5 und 6 sind in lateraler Richtung derart nebeneinander angeordnet, sodass sie über ihre Seitenflächen im Wesentlichen flächig miteinander in Kontakt stehen. Dabei ist jeweils zwischen zwei Formsteinen 4 eine Stoßfuge 11 ausgebildet. Auch zwischen einer äußeren Wandung 12 des Speicherelements 3 und den Formsteinen 4 können Stoßfugen 11 vorliegen. Die Stoßfugen 11 sind so ausgebildet, dass keine oder lediglich eine geringe Durchströmung der Stoßfugen 11 durch das Medium während des Be- oder Entladens auftreten kann.

Die Formsteine 4 der Lagen 5 und 6 sind nun so angeordnet, dass die Formsteine 4 der zweiten Lage 6 die Stoßfugen 11 zwischen den Formsteinen 4 der ersten Lage 5 überdecken. Sie sind zu diesem Zweck lateral versetzt angeordnet. Die Formsteine 4 mehrerer Lagen, beispielsweise der Lagen 5 und 6, bilden also einen Mauerverbund 13 beziehungsweise sind in einem solchen angeordnet. Die Formsteine 4 können dabei, wie in der Figur 1 erkennbar, in seitlicher Richtung gegeneinander versetzt sein. Zusätzlich oder alternativ ist es jedoch auch möglich, dass die Formsteine 4 senkrecht zu dieser Richtung ebenfalls versetzt angeordnet sind, beispielsweise die zweite Lage 6 bezüglich der ersten Lage 5 in die Zeichenebene hineinversetzt ist.

Zwischen der ersten Lage 5 und der zweiten Lage 6 sind Querstromräume 14 vorgesehen. Der Querstromraum 14 erlaubt eine Querverteilung des Mediums während des Durchströmens des Speicherelements 3. In den Bereichen, in welchen kein Querstromraum 14 vorgesehen ist, strömt das Medium beispielsweise in Richtung des Pfeils 15 von der ersten Lage 5 in die zweite Lage 6. Ist der Querstromraum 14 vorgesehen, so kann beispielsweise ein Verlauf des Mediums entlang des Pfeils 16 vorliegen. Die Querstromräume 14 werden von Füßen 17 der Formsteine 4 gebildet. Über die Füße 17 treten die Formsteine 4 der zweiten Lage 6 mit den Formsteinen 4 der ersten Lage 5 in Kontakt. Es liegt also kein vollflächiger Kontakt zwischen den Formsteinen 4 der ersten Lage 5 mit jenen der zweiten Lage 6 vor. Somit wird eine Kontaktfläche 18 zwischen den Formsteinen 4 verringert. Auf diese Weise kann die Wärmeleitung zwischen den Lagen 5 und 6 ebenfalls verringert werden. Zusätzlich zu der Ausbildung der Querstromräume 14 kommt den Füßen 17 also die Aufgabe zu, die Kontaktfläche 18 zwischen den Formsteinen 4 der Lagen 5 und 6 derart zu verringern, dass die Wärmeleitung zwischen diesen gering ist.

Dabei sind die Füße 17 einstückig mit einem übrigen Bereich 19 des Formsteins 4 ausgebildet. Der übrige Bereich 19 kann auch als Formsteinkörper bezeichnet werden. Die Füße 17 werden beispielsweise mittels eines abtragenden Verfahrens, beispielsweise Fräsen, aus dem Formstein 4 herausgearbeitet. Dabei wird auch der Querstromraum 14 gebildet.

Um die Formsteine 4 in ihrer Position zu halten, ist beispielsweise im Bereich zwischen dem zweiten Sammelraum 8 und der ersten Lage 5 der Formsteine 4 eine strömungsdurchlässige Abstützung 20 vorgesehen, auf welcher die Formsteine 4 der ersten Lage 5 mit ihren Füßen 17 stehen.

Der Wärmespeicher 1 beziehungsweise das Speicherelement 3 stellt im Wesentlichen einen Monospeicher dar. Dabei ist es jedoch gegeben, dass eine Temperaturschichtung in dem Wärmespeicher lange erhalten bleibt. Bei einem Beladen des Wärmespeichers 1, also einem Durchströmen mit heißem Medium in Richtung des Pfeils 2 bildet sich in dem Speicherelement 3 ein "warmes" Ende 21 und ein "kaltes" Ende 22 aus. Das bedeutet, dass an dem Ende 21 eine hohe, an dem Ende 22 eine vergleichsweise niedrige Temperatur vorliegt. Zwischen diesen beiden Temperaturen kann über die Höhe des Speicherelements 3 unmittelbar nach dem Beladen eine beliebige Temperaturverteilung vorliegen. Diese Temperaturverteilung bleibt im Laufe der Zeit im Wesentlichen gleich beziehungsweise verändert sich nur geringfügig. Diese Veränderungen können beispielsweise im Bereich von Wandungen 12 vorliegen, wo die Temperatur etwas abfallen wird, da die Isolierung des Wärmespeichers 1 keine vollständig adiabate Randbedingung ermöglicht.

Die Figur 2 zeigt eine seitliche Schnittansicht eines einzelnen, freigestellten Formsteins 4. Erkennbar sind hier die Durchströmungskanäle 23, welche in diesem ausgebildet sind. Die Durchströmungskanäle 23 sind sowohl an einem oberen Ende 24 als auch an einem unteren Ende 25 offen, stehen also auf beiden Seiten in Fluidkontakt mit einer Umgebung 26 des Formsteins 4. Wie in den Figuren 2 und 3 erkennbar, sind die Füße 17 in dieser Ausführungsform im Gegensatz zu dem in der Figur 1 dargestellten Beispiel lediglich in Ecken des Formsteins 4 vorgesehen. Die Füße 17 sind beispielsweise durch Ausfräsen des Formsteins 4 an seinem unteren Ende 25 gebildet. Dabei entsteht gleichzeitig der Querstromraum 14, welcher hier im Querschnitt kreisrund ausgebildet ist. Die Füße 17 beziehungsweise der Querstromraum 14 sind so vorgesehen, dass seitlich Überströmöffnungen 27 gebildet sind, die mit Überströmöffnungen 27 von weiteren Formsteinen 4 zusammenwirken, um den Querstromraum 14 über mehrere nebeneinander angeordnete Formsteine 4 hinweg zu vergrößern. Auf diese Weise kann ein Querstromraum 14 vorliegen, welcher sich in lateraler Richtung über mehrere Formsteine 4 erstreckt. Über die Überströmöffnungen 27 stehen also die Querstromräume 14 mehrerer Formsteine 4 in Fluidverbindung.

In Figur 3 ist erkennbar, dass die Durchströmungskanäle 23 sowohl im Bereich des Querstromraums 14 als auch im Bereich der Füße 17 vorgesehen sind. Die Durchströmungskanäle 23 sind in dem dargestellten Beispiel rund, alternativ ist jedoch auch ein rechteckiger, insbesondere quadratischer, Querschnitt der Durchströmungskanäle 23 möglich. Euch eine Kombination von Durchströmungskanälen 23 mit unterschiedlichem Querschnitt erscheint möglich. Beispielsweise können die Formsteine 4 in einem äußeren Bereich runde Durchströmungskanäle 23 und in einem inneren Bereich rechteckige Durchströmungskanäle 23 oder umgekehrt aufweisen.

Für den Wärmespeicher 1 können insbesondere sehr große Formsteine 4 verwendet werden, beispielsweise solche mit einer Grundfläche von 150 mm auf 150 mm, sogenannte 60 Zoll-Formsteine. Formsteine 4 dieser Größe können beispielsweise mit 60 auf 60, also 3600, Durchströmungskanälen 23 versehen sein. Durch die Anordnung der Formsteine 4 im Mauerverbund 13 wird, wie bereits beschrieben, eine Vergleichmäßigung der Temperatur verzögert beziehungsweise verhindert. Diese Wirkung des Wärmespeichers 1 kann durch die Querstromräume 14, die Füße 17 und das Verwenden der 60 Zoll-Formsteine weiter verbessert werden. Während die höchste Effizienz mit einer Kombination dieser Maßnahmen erreicht wird, reicht bereits die Verwirklichung einzelner Maßnahmen aus, um einen Wärmespeicher 1 mit einer deutlich verzögerten Vergleichmäßigung der Temperatur zu erhalten.

Bei einem Entladen des Wärmespeichers 1, welches durch Beschicken des Wärmespeichers 1 mit einem Medium entgegen der Richtung des Pfeils 2 erfolgt, kann somit eine Temperatur des in dem Wärmespeicher 1 erwärmten Mediums erzielt werden, welche nahe bei der Temperatur des zum Beladen verwendeten Mediums liegt. Dies ist bei herkömmlichen Wärmespeichern nicht der Fall, da hier nach bereits kurzer Zeit eine starke Vergleichmäßigung des Temperaturprofils stattgefunden hat, womit das zum Entladen verwendete Medium lediglich auf eine vergleichsweise geringe Temperatur gebracht werden kann.

## Patentansprüche

1. Wärmespeicher (1) mit mindestens einem Speicherelement (3), das übereinander geschichtete Formsteine (4) aus Keramik aufweist, die im Wesentlichen in einem Mauerverbund (13) angeordnet sind, wobei jeder Formstein (4) einen im Wesentlichen rechteckigen und/oder dreieckigen Querschnitt aufweist, zumindest einige der Formsteine (4) insbesondere eine Wärmeleitung von einem Formstein (4) zu einem anderen Formstein (4) vermindernde Füße (17) aufweisen, die in den Ecken des Formsteins (4) vorgesehen sind, **dadurch gekennzeichnet, dass** die Füge (17) durch Ausfräsen des Formsteins (4) an seinem unteren Ende gebildet sind, wobei durch das Ausfräsen gleichzeitig ein im Querschnitt kreisrunder Querstromraum (14) mit seitlichen Überströmöffnungen (27) ausgebildet ist, und die Überströmöffnungen (27) mit Überströmöffnungen (27) von weiteren Formsteinen (4) zum Vergrößern des Querstromraums (14) über mehrere nebeneinander angeordnete Formsteine (4) hinweg zusammenwirken.

2. Wärmespeicher nach Anspruch 1, **dadurch gekennzeichnet, dass** die Formsteine (4) mehrere Formsteinlagen (5,6) bilden, wobei zwischen mindestens zwei Formsteinlagen (5,6) mindestens der eine Querstromraum (14) ausgebildet ist.

3. Wärmespeicher nach einem der vorhergehenden Ansprüche, **gekennzeichnet durch** mindestens einen unterhalb und/oder oberhalb des Speicherelements (3) ausgebildeten Sammelraum (7,8) für ein den Wärmespeicher (1) durchströmendes Medium.

4. Wärmespeicher nach einem der vorhergehenden Ansprüche, **gekennzeichnet durch** mindestens einen Mediumeinlass (9) in dem zugeordneten Sammelraum (7), wobei der Mediumeinlass (9) quer zur Durchströmungsrichtung (2) des Mediums **durch** die Formsteine (4) vorgesehen ist.

5. Wärmespeicher nach einem der vorhergehenden Ansprüche, **gekennzeichnet durch** mindestens einen Mediumauslass (10) in dem zugeordneten Sammelraum (8), wobei der Mediumauslass (10) quer zur Durchströmungsrichung (2) des Mediums **durch** die Formsteine (4) vorgesehen ist.

6. Wärmespeicher nach einem der vorhergehenden Ansprüche, **dadurch gekennzeichnet, dass** der Formstein (4) ein Wabenstein ist.

## Claims

1. Heat storage (1) having at least one storage element (3), which contains stacked moulded bricks (4) of ceramic, which are essentially arranged in a composite wall (13), each moulded brick (4) essentially having a rectangular and/or triangular cross-section, at least some of the moulded bricks (4) in particular having feet (17) reducing heat conduction from one moulded brick (4) to another moulded brick (4), which feet are provided in the corners of the moulded brick (4), **characterized in that** the feet (17) are formed by milling out the moulded brick (4) on its bottom end, a cross-flow space (14) circular in cross-section with lateral overflow openings (27) simultaneously being formed by milling out, and the overflow openings (27) interacting with overflow openings (27) of further moulded bricks (4) for enlarging the cross-flow space (14) over a number of moulded bricks (4) arranged next to one another.

2. Heat storage according to Claim 1, **characterized in that** the moulded bricks (4) form a number of moulded brick layers (5, 6), at least the one cross-flow space (14) being formed between at least two moulded brick layers (5, 6).

3. Heat storage according to one of the preceding claims, **characterized by** at least one collecting space (7, 8) for a medium flowing through the heat storage (1) formed below and/or above the storage element (3).

4. Heat storage according to one of the preceding claims, **characterized by** at least one medium inlet (9) in the associated collecting space (7), the medium inlet (9) being provided at right angles to the flow direction (2) of the medium through the moulded bricks (4).

5. Heat storage according to one of the preceding claims, **characterized by** at least one medium outlet (10) in the associated collecting space (8), the medium outlet (10) being provided at right angles to the flow direction (2) of the medium through the moulded bricks (4).

6. Heat storage according to one of the preceding claims, **characterized in that** the moulded brick (4) is a honeycomb brick.

## Revendications

1. Accumulateur de chaleur (1) avec au moins un élément accumulateur (3) comportant des briques (4) en céramique superposées en couches, lesquelles sont sensiblement agencées en paroi maçonnée (13), chaque brique (4) présentant une section transversale sensiblement rectangulaire et/ou triangulaire, au moins quelques-unes des briques (4) présentant des pieds (17) qui réduisent en particulier la conduction thermique d'une brique (4) à une autre brique (4), prévus dans les coins de la brique (4), **caractérisé en ce que** les pieds (17) sont formés par fraisage de la brique (4) à son extrémité inférieure, un compartiment à flux transversal (14) de section circulaire avec des ouvertures de décharge (27) latérales étant simultanément formé par le fraisage, et les ouvertures de décharge (27) coopérant avec des ouvertures de décharge (27) d'autres briques (4) pour agrandir le compartiment à flux transversal (14) sur plusieurs briques (4) disposées côte à côte.

2. Accumulateur de chaleur selon la revendication 1, **caractérisé en ce que** les briques (4) forment plusieurs couches (5, 6) de briques, au moins le premier compartiment à flux transversal (14) étant réalisé entre au moins deux couches (5, 6) de briques.

3. Accumulateur de chaleur selon l'une des revendications précédentes, **caractérisé par** au moins un compartiment collecteur (7, 8) réalisé en dessous et/ou au-dessus de l'élément accumulateur (3) pour un fluide traversant l'accumulateur de chaleur (1).

4. Accumulateur de chaleur selon l'une des revendications précédentes, **caractérisé par** au moins une entrée (9) de fluide dans le compartiment collecteur (7) correspondant, l'entrée (9) de fluide étant prévue transversalement au sens de traversée (2) du fluide dans les briques (4).

5. Accumulateur de chaleur selon l'une des revendications précédentes, **caractérisé par** au moins une sortie (10) de fluide dans le compartiment collecteur (8) correspondant, la sortie (10) de fluide étant prévue transversalement au sens de traversée (2) du fluide dans les briques (4).

6. Accumulateur de chaleur selon l'une des revendications précédentes, **caractérisé en ce que** la brique (4) est une brique alvéolée.
